Europäisches Patentamt

European Patent Office

Office européen des brevets

(19)

(11) Numéro de publication : **0 018 617**
**B1**

(12) # FASCICULE DE BREVET EUROPÉEN

(45) Date de publication du fascicule du brevet :
28.12.83

(51) Int. Cl.³ : **H 04 Q 11/04**

(21) Numéro de dépôt : 80102280.7

(22) Date de dépôt : 28.04.80

(54) **Système d'échange de messages codés entre stations.**

(30) Priorité : 04.05.79 FR 7911319

(43) Date de publication de la demande :
12.11.80 Bulletin 80/23

(45) Mention de la délivrance du brevet :
28.12.83 Bulletin 83/52

(84) Etats contractants désignés :
BE CH DE FR GB IT LI NL SE

(56) Documents cités :
CH-A- 527 547
FR-A- 2 342 611
COMMUTATION & ELECTRONIQUE, no. 56, janvier 1977 Paris FR G. ANSELMO: "Système E10. Echanges entre les sous-ensembles", pages 25-38
APPORTS DE L'INFORMATION AUX TELECOMMUNI-CATIONS, congrès 7-9 novembre 1973 Rennes FR J.B. JACOB: "Le système de commutation électronique temporelle E10", pages 151-159
PROCEEDINGS OF THE IEEE, vol. 65 no. 9, septembre 1977 New York US N. JOVIC et al.: "Interprocessor communication In systems with distributed control pages 1323-1329
1972 INTERNATIONAL ZÜRICH SEMINAR ON INTE-GRATED SYSTEMS FOR SPEECH, VIDEO AND DATA COMMUNICATIONS, 15-17 mars 1972 Zürich CH P.G. FONTOLLIET:"Transmission of control information in IFS-1" pages B5(1)-B5(4)
1978 INTERNATIONAL CONFERENCE ON COMMUNI-CATIONS, vol. 2, 4-7 juin 1978, IEEE New York US E.W. ANDERSON et al.: "A microprocessor-based controller for a loop switching system",pages 24.4.1-24.4.6.

(73) Titulaire : **COMPAGNIE INDUSTRIELLE DES TELE-COMMUNICATIONS CIT-ALCATEL S.A. dite:**
**12, rue de la Baume**
**F-75008 Paris (FR)**

(72) Inventeur : **Jacob, Jean-Baptiste**
**Kertanguy**
**Saint-Quay-Perros F-22700 Perros-Guirec (FR)**
Inventeur : **Mathieu, Yves**
**Rue de l'Oratoire**
**F-22700 Perros-Guirec (FR)**
Inventeur : **Ruvoen, Michel**
**13, Cité Morgane**
**F-22560 Trebeurden (FR)**

(74) Mandataire : **Weinmiller, Jürgen et al**
**Zeppelinstrasse 63**
**D-8000 München 80 (DE)**

# 0 018 617

## Système d'échange de messages codés entre stations

L'invention concerne les systèmes d'échange de messages codés entre stations et notamment, mais non exclusivement entre les organes de commande d'un central de commutation temporelle.

On connaît par l'article de Jovic « Interprocessor Communication in Systems with distributed Control » paru dans la revue Proceedings of the IEEE, vol. 65, n° 9, septembre 1977, pages 1323 à 1329, un dispositif de liaison entre stations. Dans ce dispositif, les stations sont interconnectées par trois bus, un bus de données, un bus d'adresses destinataires et un bus d'adresses sources, celui-ci étant relié à un générateur cyclique d'adresses. Chaque station émet simultanément sur le bus d'adresses destination et sur le bus de données pendant le créneau de temps qui lui est affecté de manière cyclique par le générateur cyclique d'adresses. L'acceptation de chaque mot du message est signifiée par le destinataire à l'émetteur par émission d'un signal d'accusé de réception dans le créneau de temps affecté au destinataire.

Ce dispositif présente les inconvénients suivants :

— chaque station ignore l'état de disponibilité des fonctions implémentées par chacune des autres stations,

— chaque station ignore l'état de disponibilité en réception (veille) de chacune des autres stations,

— les messages échangés ne font l'objet d'aucune protection par adjonction d'un élément binaire d'imparité.

La présente invention a pour but un système d'échanges de messages codés entre stations ne présentant pas les inconvénients du dispositif connu. Selon l'invention, un système d'échange de messages codés entre stations reliées entre elles par un bus de signalisation et un bus d'information, chaque station étant reliée à une base de temps générale et comportant un module de liaison relié aux bus d'information et de signalisation, qui sont des multiplex synchrones de la base de temps, un créneau de temps dans une trame de signalisation étant affecté à chaque station dont le module de liaison comporte des moyens pour appeler dans son créneau de temps une autre station par émission du numéro de ladite station appelée, est caractérisé par le fait que les multiplex sont des multiplex série, que dans la trame de signalisation chaque créneau de temps est constitué par deux voies temporelles, une voie paire et une voie impaire suivante et que chaque module de liaison comporte :

— des moyens pour recevoir, dans son créneau de temps, une réponse émise par la station appelée et des moyens pour autoriser l'émission d'un message d'informations,

— des moyens pour émettre, dans le créneau de temps de la station appelante, une réponse à la réception de son numéro émis par la station appelante,

— des moyens pour mémoriser un message d'informations et émettre ledit moyen dans une trame du bus d'informations,

— des moyens pour recevoir un message d'informations et mémoriser ledit message,

— des moyens pour calculer l'imparité du message émis et émettre un élément binaire d'imparité à la suite du message, et

— des moyens pour calculer l'imparité du message d'informations reçu constitué par l'ensemble message d'informations plus élément binaire d'imparité, et des moyens pour émettre dans la trame d'informations, à la suite du message, un signal bien reçu ou un signal mauvaise imparité reçue selon le résultat du calcul.

Dans le système d'échange de messages codés la détection rapide des fautes permet de ne pas perdre de message. De même l'état de chaque module de liaison est émis dans chaque trame, dans le créneau de temps réservé, chaque module de liaison mémorisant l'état des autres, ce qui permet un gain de temps, dans les échanges de message si l'un des modules de liaison est hors service.

La description qui va suivre d'un exemple de réalisation illustré par les figures annexées permettra de bien comprendre l'invention. Dans les figures :

la figure 1 représente schématiquement un système d'échange conforme à l'invention,

la figure 2 représente schématiquement une station du système de la figure 1,

les figures 3 et 4 représentent respectivement une partie signalisation et une partie information du module de liaison de la figure 2.

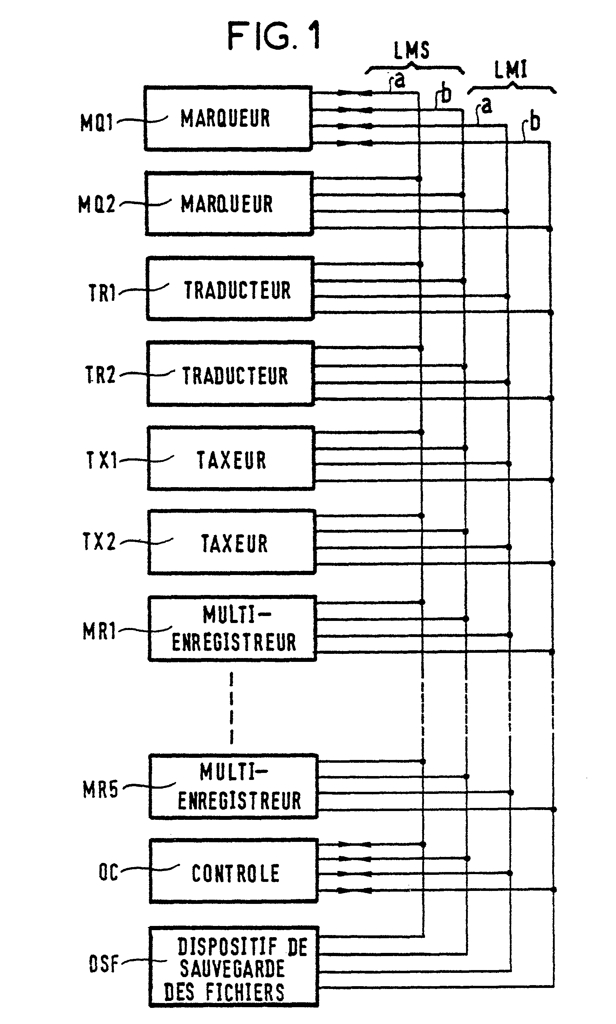

La figure 1 représente schématiquement le système d'échange conforme à l'invention, MQ1 et MQ2 représentant des stations marqueurs, TR1 et TR2 des stations traducteurs, TX1 et TX2 des stations taxeurs, MR1 --- MR5 des stations multienregistreurs, OC une station de contrôle reliée à un centre de traitement des informations, et DSF une station dispositif de sauvegarde des fichiers. Toutes les stations sont reliées entre elles par des liaisons de signalisation LMSa, LMSb, et des liaisons d'information LMIa, LMIb, bidirectionnelles ; il y a deux liaisons de signalisation et deux liaisons d'information pour des raisons de sécurité.

Chaque station, de type connu en soi, comporte un module de liaison comportant un amplificateur d'émission et un amplificateur de réception sur chacune des liaisons de signalisation et d'information ; chaque liaison est organisée en bus bidirectionnel et permet à chaque station de dialoguer avec une quelconque des autres stations reliées au bus ; chaque bus est un multiplex série synchronisé par une base de temps générale.

# 0 018 617

Ces liaisons relient la station de contrôle OC aux autres stations ; une station comporte un organe de commande, marqueur, taxeur, traducteur, multienregistreur, dispositif de sauvegarde des fichiers ou organe de contrôle, et un module de liaison.

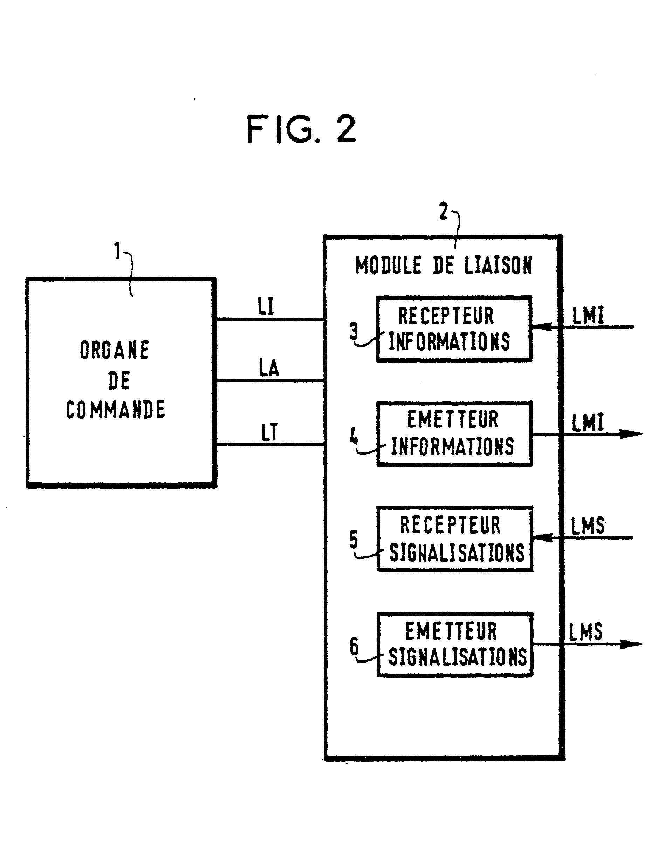

La figure 2 représente schématiquement une station de la figure 1. Une station comporte un organe de commande 1 qui assure la fonction pour laquelle il est conçu (marqueur, taxeur....) et un module de liaison 2 auquel il est relié par un bus d'information interne LI, un bus de signaux de test LT et un bus d'adresses LA.

Le module de liaison comporte :
— un récepteur d'information 3 relié au bus d'information LMI constitué des liaisons d'informations LMIa, LMIb ;
— un émetteur d'informations 4 relié au bus d'information LMI constitué des liaisons d'informations LMIa, LMIb ;
— un récepteur de signalisation 5 relié au bus de signalisation LMS constitué des liaisons de signalisation LMSa, LMSb ;
— un émetteur de signalisation 6 relié au bus de signalisation LMS constitué des liaisons de signalisation LMSa, LMSb.

Les récepteurs 3 et 5 comprennent chacun deux amplificateurs, un pour chaque liaison constituant un bus. De même les émetteurs 4 et 6 comprennent chacun deux amplificateurs un pour chaque liaison constituant un bus.

L'émission a lieu sur les deux liaisons constituant un bus ; par contre la réception n'a lieu que sur l'une des liaisons d'un bus, la commutation s'effectuant suite à la détection d'une mauvaise imparité ; cette commutation est commandée par l'organe de commande 1 associé au module de liaison 2.

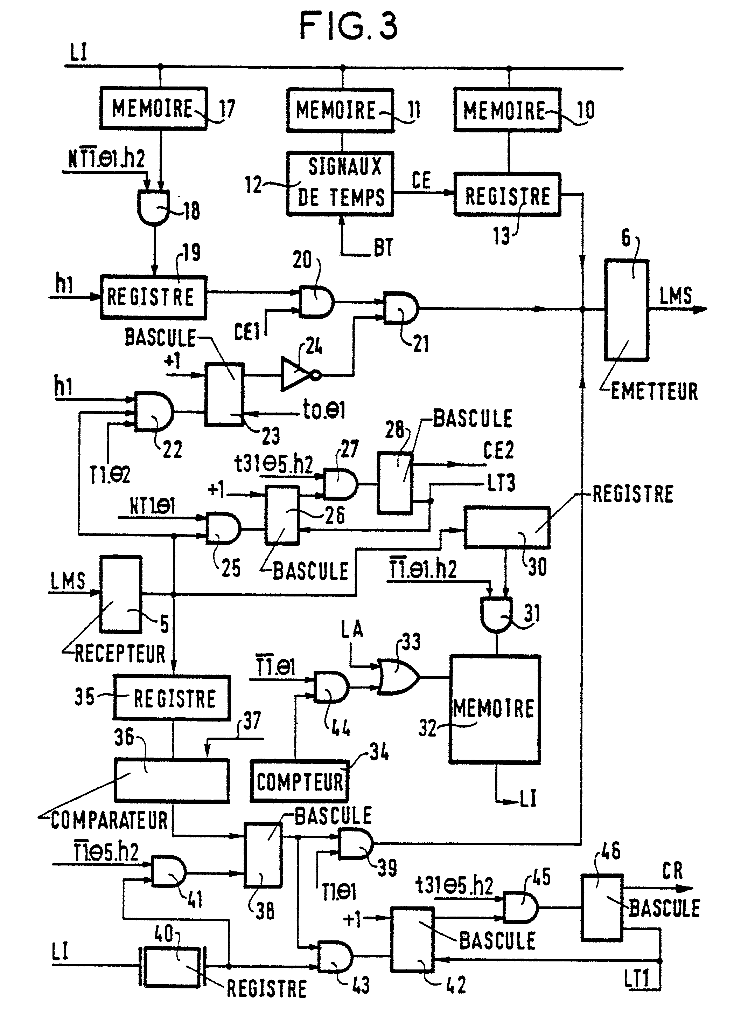

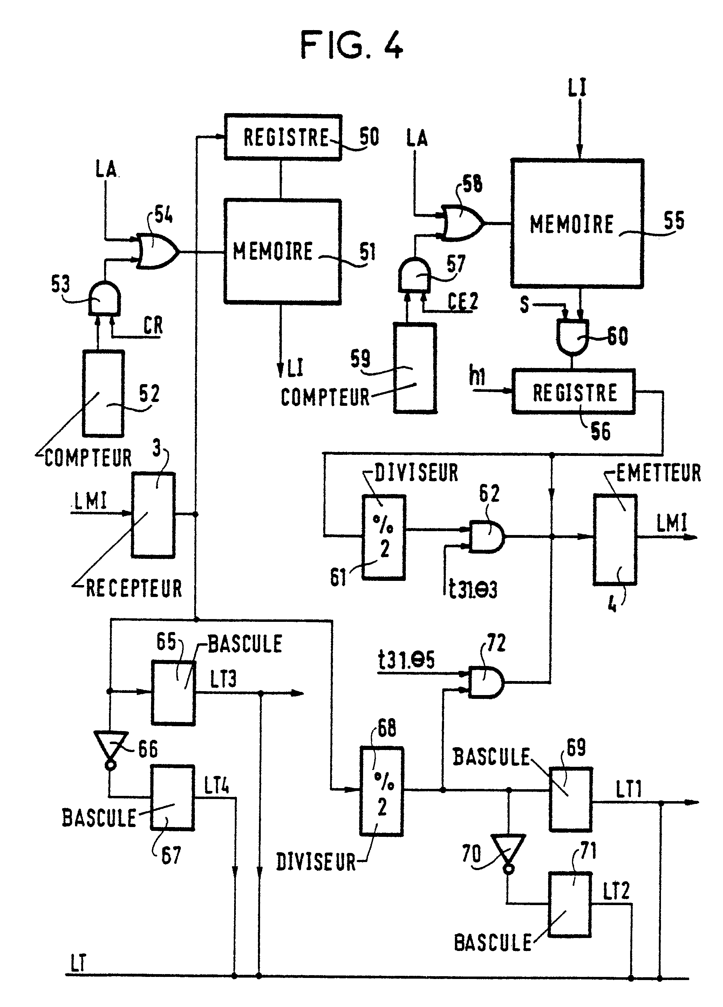

Le module de liaison 2 comprend une partie information associée au bus d'information LMI et une partie signalisation associée au bus de signalisation LMS. La figure 3 représente la partie signalisation et la figure 4 représente la partie information d'un module de liaison.

Dans la figure 3 qui représente la partie signalisation d'un module de liaison on retrouve le récepteur de signalisation 5 et l'émetteur de signalisation 6 de la figure 2. Une mémoire d'état 10 est reliée au bus d'information interne LI et en reçoit l'état de l'organe de commande associé au module de liaison ; une mémoire de numéro d'organe 11, qui est un registre parallèle, est reliée au bus d'information interne LI et on reçoit le numéro n de l'organe de commande ; un circuit d'élaboration de signaux de temps 12 est relié à la sortie de la mémoire de numéro d'organe 11 et reçoit les signaux BT d'une base de temps de l'organe de commande associé ; le circuit d'élaboration de signaux de temps élabore des signaux ou crénaux de temps qui seront utilisés dans le module de liaison ; un créneau de temps CE est appliqué à un registre d'émission 13, de type parallèle-série, relié en entrée à la mémoire d'état 10 et en sortie à l'émetteur de signalisation 6.

On va indiquer la définition des signaux qui sont utilisés dans le module de liaison :
— ti signal lié à une voie temporelle ; durée 3, 9 microsecondes, période 125 microsecondes ; il y a 32 signaux ti dans une trame.
— $\theta 1, \theta 2, \theta 3, \theta 4, \theta 5$, signaux de 780 nanosecondes de durée, et 3, 9 microsecondes de période ; ces signaux sont décalés de 780 nanosecondes les uns par rapport aux autres.
— h1, h2, signaux de 120 nanosecondes de durée, période 780 nanosecondes, ils sont décalés de 300 nanosecondes. Le signal h2 est en phase avec les signaux $\theta 1$ à $\theta 5$, c'est-à-dire que leurs fronts montants coïncident dans le temps.
— T1 signal de durée 3, 9 microsecondes et de période 7, 8 microsecondes.

Le signal T1 est en phase avec les voies temporelles impaires t1, t3 ... t31, et a donc la valeur 1 pour ces voies temporelles.

Le signal $\overline{T1}$ est le signal T1 inversé, et correspond aux voies temporelles paires.

Ces signaux sont délivrés par la base de temps de l'organe de commande.

Comme cela sera précisé plus loin, chaque organe de commande a une voie temporelle paire t2n et une voie temporelle impaire t(2n + 1) qui lui sont affectées dans une trame, n étant le numéro attribué à l'organe de commande ; par la suite on désignera par NT1 la voie impaire et par $\overline{NT1}$ la voie temporelle paire d'un organe de commande. Le créneau de temps CE est délivré en NT1 sa durée étant définie par les signaux $\theta 2, \theta 3, \theta 4$, il est élaboré à chaque voie impaire attribuée à l'organe de commande.

Une mémoire de numéro d'appel 17 est reliée au bus d'information interne LI qui délivre le numéro de l'organe de commande appelé ; cette mémoire est un registre parallèle parallèle dont la sortie est reliée à une entrée d'une porte ET 18 recevant sur une autre entrée un signal $\overline{NT1}, \theta 1.h2$ ; la sortie de la porte ET 18 est reliée à l'entrée d'un registre d'émission 19, de type parallèle série, commandé par le signal h1. La sortie du registre d'émission 19 est reliée à une entrée d'une porte ET 20 dont une autre entrée reçoit un signal CE1 qui est un créneau de temps correspondant à la voie temporelle paire $\overline{NT1}$ réservée à l'organe de commande, et de durée $\theta 1$ à $\theta 4$.

La sortie de la porte ET 20 est reliée à une entrée d'une porte ET 21 dont la sortie est reliée à l'émetteur de signalisation 6. Une porte ET 22 reçoit sur une entrée le signal h1, sur une autre entrée le signal T1.$\theta 2$, une autre entrée étant reliée au récepteur de signalisation 5 ; la sortie de la porte ET 22 est reliée à une entrée de commande d'une bascule 23 qui reçoit un signal + 1 sur une autre entrée, et un signal de remise à zéro to.$\theta 1$ ; la sortie de la bascule 23 est reliée à travers un inverseur 24 à une autre

3

entrée de la porte ET 21.

Le récepteur de signalisation est relié à une entrée d'une porte ET 25 validée par un signal NT1.θ1, la sortie de la porte ET 25 est reliée à une entrée de commande d'une bascule 26 recevant un « 1 » sur une autre entrée ;

La sortie de la bascule 26 est reliée à une entrée d'une porte ET 27 dont une autre entrée reçoit un signal t31.θ5.h2 ; la sortie de la porte ET 27 est reliée à l'entrée d'une bascule 28 qui délivre en sortie un signal de validation à l'émission CE2 à destination de la partie information (figure 4) ; les bascules 26 et 28 sont remises à zéro par un signal sur la liaison LT3 signal émis par une bascule fin d'échange en émission de la figure 4.

Le récepteur de signalisation 5 est relié à un registre de réception d'état 30, de type série-parallèle, dont la sortie est reliée à une entrée d'une porte ET 31 recevant sur une autre entrée un signal $\overline{T1}.\,θ1.h2$ ; la sortie de la porte ET 31 est reliée à l'entrée d'une mémoire d'état des organes 32 qui mémorise les états des organes de commande reliés au bus d'information LMI et au bus de signalisation LMS (figure 1) ; la sortie de la mémoire d'état des organes est reliée au bus d'information interne LI. Une porte OU 33 a sa sortie reliée à l'entrée d'adressage de la mémoire d'état des organes, une entrée reliée au bus d'adresses LA et une autre entrée reliée à un compteur 34 à travers une porte ET 44 pour un adressage cyclique de la mémoire ; la porte ET 44 est validée par un signal $\overline{T1}.θ1$.

La sortie du récepteur de signalisation 5 est également reliée à un registre de réception 35, de type série-parallèle, recevant un numéro d'appel émis par un autre organe de commande ; la sortie du registre de réception est reliée à une entrée d'un comparateur 36 dont une autre entrée reçoit par une liaison 37 le numéro de l'organe de commande associé au module de liaison ; ce numéro est obtenu par câblage. La sortie du comparateur est reliée à une entrée d'une bascule 38 dont la sortie est reliée à une entrée d'une porte ET 39 reliée en sortie à l'émetteur de signalisation 6, la porte ET 39 recevant sur une autre entrée un signal T1.θ1. Un registre de veille 40 est relié en entrée au bus d'information interne LI qui lui délivre un signal de valeur 0 lorsque l'organe de commande associé au module de liaison traite un message ; la sortie du registre de veille est reliée à une entrée d'une porte ET 41 qui reçoit sur une autre entrée un signal T1.θ5.h2 ; la sortie de la porte ET 41 est reliée à une entrée de commande de la bascule 38. La sortie du registre de veille 40 est également reliée à une entrée d'une porte ET 43 dont une autre entrée est reliée à la sortie de la bascule 38 ; la sortie de la porte ET 43 est reliée à une entrée de commande d'une bascule 42 dont une entrée reçoit un signal + 1.

La sortie de la bascule 42 est reliée à une entrée d'une porte ET 45 qui reçoit sur une autre entrée un signal t31.θ5.h2 ; la sortie de la porte ET 45 est reliée à une bascule 46 qui délivre un signal de validation à la réception CR à la partie information (figure 4) ; les bascules 42 et 46 sont remises à zéro par un signal sur la liaison LT1, signal émis par une bascule fin d'échange en réception de la figure 4. Lorsque l'organe de commande est libre, le registre de veille 40 délivre un signal qui positionne la bascule 38 de manière à obtenir un signal de réponse en sortie de la porte ET 39 lorsque le comparateur 36 délivre un signal suite à une bonne comparaison entre le numéro reçu et son numéro câblé ; le signal délivré par le registre de veille 40 permet également, lorsque la bascule 38 délivre un signal, d'obtenir le signal de validation CR.

La figure 4 représente la partie information d'un module de liaison ; on y retrouve le récepteur d'informations 3 et l'émetteur d'informations 4 de la figure 2. Un registre 50, de type série-parallèle est relié au récepteur d'informations 3 ; sa sortie est reliée à une mémoire de réception 51 dont la sortie est reliée au bus d'information LI.

A l'écriture la mémoire de réception est adressée par l'organe de commande, par le bus d'adresses LA via une porte OU 54 ; à la lecture l'adressage est cyclique, à partir d'un compteur 52 et d'une porte ET 53 validée par le signal de validation en réception CR émis par la bascule 46 de la figure 3 ; la sortie de la porte ET 53 est reliée à la porte OU 54.

Une mémoire d'émission 55 est reliée en entrée au bus d'information interne LI et reçoit un message ; l'adressage pour l'écriture du message est effectué par l'organe de commande, par le bus d'adresses LA, via une porte OU 58 ; à la lecture la mémoire d'émission est adressée cycliquement par un compteur 59 via une porte ET 57 et la porte OU 58, la porte ET 57 étant validée par le signal de validation à l'émission CE2, émis par la bascule 28 de la figure 3. La sortie de la mémoire d'émission est reliée à un registre 56, de type parallèle série, via une porte ET 60 validée tous les seize éléments binaires de la trame du message, puisque celui-ci est constitué de mots de 16 e b, par un signal S, délivré par le circuit d'élaboration de signaux de temps 12 de la figure 3, lorsque le module de liaison est autorisé à émettre un message.

Le registre 56 est commandé par le signal h1, et sa sortie est reliée, d'une part à l'émetteur d'informations 4 et d'autre part à un diviseur par deux 61 dont la sortie est reliée à une porte ET 62 validée par un signal t31.θ3 ; la sortie de la porte ET 62 est reliée à l'émetteur d'information 4. Le message à transmettre comporte 157 e b, de toθ1 à t31θ2, il est émis directement par le registre 56 à l'émetteur d'informations 4 ; le diviseur par deux 61 reçoit également le message et sa sortie en fin de message a la valeur 0 ou la valeur 1 ; cette valeur est transmise à l'émetteur de signalisation en t31θ3 et constitue l' e b d'imparité.

Le récepteur d'information 3 est également relié à une bascule fin d'échange en émission 65 et via un inverseur 66 à une bascule « non bien reçu » 67 ; ces bascules sont reliées respectivement par une liaison LT3 et une liaison LT4 au bus de signaux de test LT.

Le récepteur d'information 3 est encore relié à un diviseur par deux 68 dont la sortie est reliée à une porte ET 72 validée par un signal t31.05, à une bascule fin d'échange en réception 69 et via un inverseur 70 à une bascule « mauvaise imparité en réception » 71 ; la sortie de la porte ET 72 est reliée à l'émetteur d'information 4 et émet un signal bien reçu en t3105 ; les bascules 69 et 71 sont reliées respectivement par une liaison LT1 et une liaison LT2 au bus de signaux de test LT.

On va décrire à présent le fonctionnement d'un module de liaison tel que représenté par les figures 3 et 4.

Chaque organe de commande a la possibilité d'émettre sur le bus de signalisation LMS, constitué des liaisons LMSa et LMSb, pendant un intervalle de temps bien défini. En désignant par n le numéro d'un organe de commande, l'intervalle de temps réservé est constitué par les voies temporelles t2n et t(2n + 1) de la trame de 125 microsecondes divisée en 32 voies temporelles.

Les numéros des organes de commande sont attribués selon un ordre de priorité bien défini. Le numéro et les voies temporelles de chaque organe de commande sont donnés ci-après, dans la trame.

| t0, t1 | Voies temporelles non attribuées | |
| t2, t3 | Marqueur MQ1 | N° 1 |
| t4, t5 | Traducteur TR1 | N° 2 |
| t6, t7 | Taxeur TX1 | N° 3 |
| t8, t9 | Multienregistreur MR1 | N° 4 |
| t10, t11 | Multienregistreur MR3 | N° 5 |
| t12, t13 | Multienregistreur MR5 | N° 6 |
| t14, t15 | Dispositif de sauvegarde des fichiers DSF | N° 7 |
| t16, t17 | Voies temporelles non attribuées | |
| t18, t19 | Marqueur MQ2 | N° 9 |
| t20, t21 | Traducteur TR2 | N° 10 |
| t22, t23 | Taxeur TX2 | N° 11 |
| t24, t25 | Multienregistreur MR2 | N° 12 |
| t26, t27 | Multienregistreur MR4 | N° 13 |
| t28, t29 | Voies temporelles non attribuées | |
| t30, t31 | Organe de contrôle OC | N° 15 |

On va donner ci-après la structure des informations émises par un organe de commande dans les voies temporelles t2n et t(2n + 1) qui lui sont réservées :

voie temporelle t2n

$\theta 1$ à $\theta 4$ codage de l'adresse de l'organe appelé, émis par l'organe de commande n.

$\theta 5$ e b précisant s'il s'agit d'une demande ou d'une réponse à un message

voie temporelle t(2n + 1)

$\theta 1$ e b de réponse à l'appel, cet e b est émis par l'organe de commande m lorsqu'il est appelé.

$\theta 2$ à $\theta 4$ codage de l'état de l'organe de commande n

$\theta 5$ e b d'exclusivité émis par l'organe de commande n lorsqu'il désire s'assurer l'exclusivité d'une tâche (modifications de zones mémoires dans des organes homologues.

— Chaque organe de commande émet son état à chaque trame dans le créneau de temps $\theta 2$ à $\theta 4$ de la voie temporelle impaire qui lui est réservée.

— Chaque module de liaison reçoit tous les états d'organes émis et les mémorise dans une mémoire d'état des organes 32, figure 3, qui est chargée en $\overline{T1}.\theta 1.h2$, la mémoire étant en adressage cyclique par le compteur 34.

— Un organe de commande peut prendre six états différents, codés sur 3 e b en t(2n + 1) de $\theta 2$ à $\theta 4$ ; ces six états sont :

— NES non en service, aucun échange n'est possible, l'organe de commande étant soit hors service soit en test

— OPE opérationnel ; c'est le cas normal de fonctionnement de l'organe en service ; tous les échanges sont possibles.

— RES en service restreint ; ce code est émis par l'organe de commande en service, mais ayant dépassé un certain taux d'occupation ; l'organe de commande poursuit l'exécution des tâches déjà en cours de traitement et ne peut en initialiser de nouvelles que sous des conditions particulières.

— INDO indisponible occupé ; l'organe de commande continue d'exécuter et d'achever les tâches en cours, mais n'accepte pas d'initialisation de nouvelles opérations.

— INDL indisponible libre ; l'organe a terminé toutes les tâches en cours.

Il ne peut en accepter de nouvelles.

— INIT en cours d'initialisation ; l'organe de commande en service est en cours de recopie de l'organe de commande homologue.

Le codage des états d'organes de commande est le suivant, dans la voie temporelle t(2n + 1) :

**0 018 617**

| θ2 | θ3 | θ4 | ETAT |
|---|---|---|---|
| 0 | 0 | 0 | NES |
| 0 | 0 | 1 | OPE |
| 0 | 1 | 0 | RES |
| 0 | 1 | 1 | INDO |
| 1 | 0 | 0 | INDL |
| 1 | 0 | 1 | INIT |

Les messages sont transmis sur le bus d'information LMI, constitué des liaisons LMIa et LMIb, dans une trame, qui est en phase avec la trame du bus de signalisation LMS. Le message débute en to θ1 et se termine en t31 θ2, ce qui fournit un champ d'information de 157 e b, soit 9 mots de 16 e b plus un mot de 13 e b. L' e b d'imparité, calculé à l'émission de façon à ce que le nombre de 1 contenus dans le message, y compris l' e b d'imparité, soit impair, est émis en t31.θ3. Si à la réception l'imparité est correcte l'organe de commande récepteur retransmet, sur le bus d'informations LMI, à l'organe de commande émetteur le code de bien reçu :

$$t31.θ4 = 0 \text{ et } t31.θ5 = 1.$$

Procédure d'échange :
— La signalisation est émise sur les liaisons de signalisation LMSa et LMSb ;
— La signalisation est reçue sur une liaison de signalisation LMSa ou LMSb ;
les informations sont émises sur les liaisons d'informations LMIa et MLIb ;
les informations sont reçues sur une liaison d'informations LMIa ou LMIb.
— A l'émission le contrôle des transferts de messages est assuré par l'organe de commande qui est renseigné par les bascules fin d'échange en émission 65 et non bien reçu 67, de la figure 4. Suivant le positionnement des bascules l'organe de commande émetteur constate la bonne ou mauvaise émission du message transmis :

bascule 65 = 0 et bascule 67 = 0, l'organe de commande appelé n'a pas encore répondu ;
bascule 65 = 1 et bascule 67 = 0, l'organe de commande appelé a répondu « échange correct » ;
bascule 65 = 0 et bascule 67 = 1, l'organe de commande appelé a répondu, « échange incorrect ».

— A la réception le principe de contrôle est le même qu'à l'émission. Suivant le positionnement des bascules fin d'échange en réception 69 et mauvaise imparité en réception 71 de la figure 4 l'organe de commande appelé constate la bonne ou mauvaise réception du message.

bascule 69 = 0 et bascule 71 = 0, pas de message reçu ;
bascule 69 = 1 et bascule 71 = 0, réception correcte d'un message ;
bascule 69 = 0 et bascule 71 =1, réception erronée.

Aux temps t2nθ1 à t2nθ4, l'organe de commande appelant n émet, sur le bus de signalisation LMS, le numéro codé de l'organe de commande appelé, suivi en t2nθ5 de l'e b de nature du message, demande ou réponse. Cette émission a lieu sous réserve de la disponibilité du bus de signalisation ; pour cela l'organe de commande émetteur a sa porte ET 21, figure 3, inhibée s'il y a eu un e b de réponse émis par un organe de commande à un temps T1.θ1 antérieur au temps $\overline{NT1}$ de l'organe de commande qui appelle ($\overline{NT1}$ désignant la voie temporelle paire t2n attribuée à l'organe de commande qui appelle).

L'organe de commande appelé, s'il est en veille et sur reconnaissance de son numéro par le comparateur 36, figure 3, réémet immédiatement un e b de réponse dans la voie temporelle impaire NT1, en θ1.

L'organe de commande émetteur, sur détection de l'e b de réponse envoie alors son message sur le bus d'informations LMI dans la trame suivante, en y ajoutant l'e b d'imparité calculé ; l'organe de commande récepteur émet sur le bus d'informations LMI le code de bien reçu sur les deux derniers e b de la trame, la bonne détection de ce code dans l'organe de commande émetteur termine l'échange.

Sécurité :
— imparité du message : en cas de faute d'imparité l'organe de commande récepteur n'envoie pas le code de bien reçu à l'organe de commande émetteur qui étant ainsi alerté par la bascule « non bien reçu » 67, figure 4, a la possibilité de renouveler la procédure d'échange dans sa totalité, en recommençant par la procédure d'appel.
— doublement des liaisons d'informations et de signalisation : la commutation en réception des liaisons a et b s'opère soit sur commande de l'organe de contrôle OC, soit par l'organe de commande lui-même en fonction des fautes d'échange.
— comparaison des liaisons de signalisation LMSa et LMSb en réception : cette comparaison permet de détecter une mauvaise transmission sur l'une des deux liaisons.
— comparaison émission réception de la liaison de signalisation ; la comparaison est effectuée, à

6

l'intérieur du créneau de temps d'émission propre à l'organe de commande, entre ce qui est émis au niveau logique et ce qui est reçu de la liaison de signalisation, LMSa ou LMSb.

On va décrire à présent quelques exemples d'échanges entre deux organes de commande ; dans tous ces exemples on supposera que le marqueur MQ2 est l'organe qui appelle et que le multienregistreur MR1 est l'organe de commande appelé.

a) Transfert d'un message du marqueur MQ2 vers le multienregistreur MR1

Le marqueur MQ2 a les voies temporelles t18 et t19, et le multienregistreur MR1 a les voies temporelles t8 et t9 de la trame. Le marqueur désire émettre un message vers le multienregistreur.

Dans une trame il reçoit l'état du multienregistreur par lecture de la mémoire d'état des organes 32. Si le multienregistreur est opérationnel la mémoire de numéro d'appel 17 est chargée par le numéro du multienregistreur MR1, et le message à transmettre est chargé dans la mémoire d'émission 55.

A la trame suivante le marqueur émet le code d'appel (numéro du multienregistreur MR1) sur le bus de signalisation. Si le module de liaison du multienregistreur est en veille il reconnaît le code d'appel par le comparateur 36 et émet un e b de réponse par la bascule 38 et la porte ET 39, e b qui interdit tout autre échange sur le bus de signalisation et active, dans le multienregistreur, la bascule 46 qui émet le signal de validation à la réception CR, autorisant la réception du message qui sera émis, sur le bus d'informations LMI, à la trame suivante. Dans le marqueur la réception de l'e b de réponse émis par le multienregistreur active la bascule 28 qui émet le signal de validation à l'émission CE2, signal qui valide l'adressage de la mémoire d'émission 55.

— A la trame suivante le message est émis par le registre 56, et l'e b d'imparité est émis par la porte ET 62. Le multienregistreur reçoit le message dans la mémoire de réception 51 via le registre 50, et calcule l'imparité par le diviseur par deux 68 ; il réémet le code de bien reçu par la porte ET 72 sur le bus d'informations, à destination du marqueur.

— A la trame suivante le marqueur vient consulter les bascules 65 et 67 qui sont positionnées par le code de « bien reçu » et libère son module de liaison en émission ; le message est prêt pour un traitement par le multienregistreur.

b) Cas d'attente pour l'émission d'un message

Deux cas peuvent se présenter : 1) indisponibilité du multienregistreur, 2) le bus de signalisation est bloqué par un organe de commande plus prioritaire que le marqueur MQ2.

1) Indisponibilité du multienregistreur

Lors d'une trame le marqueur contrôle, par lecture de la mémoire d'état des organes 32, l'état du multienregistreur, et le trouve indisponible. Le marqueur est obligé de différer son appel tant que l'état indisponible subsiste.

Lors d'une autre trame le marqueur reçoit le nouvel état du multienregistreur, qui est opérationnel ; la consultation de la mémoire d'état des organes indique donc ce nouvel état et la procédure d'émission peut avoir lieu normalement comme indiqué dans l'exemple du transfert d'un message.

2) Le bus de signalisation est bloqué

Le marqueur reconnaît lors d'une trame que le multienregistreur est opérationnel, il charge la mémoire de numéro d'appel 17 et la mémoire d'émission 55 de son module de liaison.

A la trame suivante le module de liaison veut émettre le code d'appel, par le registre d'émission 19, mais un organe de commande plus prioritaire que le marqueur MQ2 a reçu une réponse à son appel et le bus de signalisation est bloqué pour toute nouvelle demande d'émission d'un code d'appel par un organe de commande ; en particulier dans le marqueur MQ2 la porte ET 21 n'est pas validée, la bascule 23 ayant basculé dans l'état 1 sur la réponse de l'organe de commande plus prioritaire que le marqueur MQ2. L'émission du code d'appel vers le multienregistreur MR1 ne pourra avoir lieu que lorsque le marqueur qui est l'organe appelant aura la priorité la plus élevée, c'est-à-dire lorsqu'aucun organe de commande de priorité plus élevée n'aura émis un appel sur le bus de signalisation et reçu une réponse qui bloque le bus de signalisation.

c) Le module du multienregistreur appelé n'est pas réceptif

Le marqueur reconnaît, lors d'une trame, que le multienregistreur est opérationnel, et charge la mémoire de numéro d'appel 17 et la mémoire d'émission 55 de son module de liaison.

A la trame suivante le module de liaison émet le code d'appel du multienregistreur. Le module de liaison du multienregistreur n'est pas en veille, le registre de veille 40 n'étant pas activé car le module de liaison du multienregistreur traite un message ; le comparateur 36 reconnaît l'appel mais l'e b de réponse ne peut être envoyé, la bascule 38 n'étant pas activée. Le module de liaison du marqueur renouvellera son

# 0 018 617

appel jusqu'à ce qu'il reçoive une réponse.

d) Mauvaise réception du message

L'émission du message est effectuée lors des deux premières trames selon la procédure décrite pour le transfert d'un message du marqueur MQ2 vers le multienregistreur MR1. A la trame suivante le message est émis par le registre 56 et l'e b d'imparité est émis par la porte ET 62. Le multienregistreur reçoit le message et calcule l'imparité par le diviseur par deux 68. Ce calcul positionne la bascule fin d'échange en réception 69 à zéro et la bascule « mauvaise imparité » en réception 71 à « 1 ». Une erreur a été effectuée lors du transfert du message et le module de liaison du multienregistreur n'émet pas de signal « bien reçu », par la porte ET 72, en t31 05, sur le bus de signalisation.

Le fait de ne pas recevoir d'impulsion de bien reçu positionne, dans le module de liaison du marqueur, la bascule fin d'échange en émission 65 à zéro et la bascule « non bien reçu » 67 à « 1 ».

A la trame suivante le marqueur vient tester, par le bus de signaux de test LT, les bascules 65 et 67 ; la validation de la bascule « non bien reçu » 67 conditionne l'émission d'un message de faute vers l'organe de contrôle OC. Le multienregistreur MR1, après avoir testé les bascules 69 et 71 de son module de liaison par son bus de signaux de test LT, émet un signal faute vers l'organe de contrôle et met son module de liaison en veille sur l'état précédent.

L'invention ne s'applique pas uniquement à un central téléphonique qui ne constitue qu'un exemple d'application ; les modules de liaison peuvent être associés à d'autres organes de commande que des marqueurs, des taxeurs, etc..., sans que l'on sorte pour cela du cadre de l'invention qui s'applique d'une manière générale aux échanges de messages entre des stations comme on en rencontre dans tout dispositif nécessitant un échange d'informations entre ses différentes stations comme cela est notamment le cas dans les techniques des télécommunications et des calculateurs.

## Revendications

1. Système d'échange de messages codés entre stations reliées entre elles par un bus de signalisation (LMS) et un bus d'informations (LMI), chaque station étant reliée à une base de temps générale et comportant un module de liaison (2) relié aux bus d'informations et de signalisation, qui sont des multiplex synchrones de la base de temps, un créneau de temps dans une trame de signalisation étant affecté à chaque station dont le module de liaison comporte des moyens pour appeler dans son créneau de temps une autre station par émission du numéro de ladite station appelée, caractérisé par le fait que les multiplex sont des multiplex série, que dans la trame de signalisation chaque créneau de temps est constitué par deux voies temporelles, une voie paire et une voie impaire suivante, et que chaque module de liaison comporte :
— des moyens (5, 25, 26) pour recevoir, dans son créneau de temps, une réponse émise par la station appelée et des moyens (27, 28) pour autoriser l'émission d'un message d'informations,
— des moyens (38, 39) pour émettre, dans le créneau de temps de la station appelante, une réponse à la réception de son numéro émis par la station appelante,
— des moyens pour mémoriser (55) un message d'informations et émettre (4) ledit moyen dans une trame du bus d'informations,
— des moyens pour recevoir (3) un message d'informations et mémoriser (51) ledit message,
— des moyens pour calculer (61) l'imparité du message émis et émettre (62,4) un élément binaire d'imparité à la suite du message, et
— des moyens pour calculer (68) l'imparité du message d'informations reçu constitué par l'ensemble message d'informations plus élément binaire d'imparité, et des moyens (72,4) pour émettre dans la trame d'informations, à la suite du message, un signal bien reçu ou un signal mauvaise imparité reçue selon le résultat du calcul.

2. Système d'échange de messages codés entre stations selon la revendication 1, caractérisé par le fait que le module de liaison comporte également
— des moyens pour émettre (13) son état dans son créneau de temps, et
— des moyens pour recevoir (30) et mémoriser (32) l'état de chacune des autres stations.

3. Système d'échange de messages codés entre stations selon la revendication 1, caractérisé par le fait que dans la trame de signalisation les numéros des voies temporelles d'un créneau de temps sont d'autant plus élevés que la priorité d'une station est plus faible et que le module de liaison comporte également des moyens (22, 23) pour recevoir, dans le créneau de temps d'une station plus prioritaire, une réponse émise par une station appelée par une station plus prioritaire, et inhiber l'émission d'un message d'informations.

4. Système d'échange de messages codés entre stations selon la revendication 1, caractérisé par le fait que le numéro d'une station appelée est transmis dans la voie temporelle paire du créneau de temps attribué au moule de liaison.

5. Système d'échange de messages codés entre stations selon la revendication 1, caractérisé par le fait qu'un élément binaire indiquant la nature d'un message est émis dans la voie temporelle paire du

8

**0 018 617**

créneau de temps attribué au module de liaison.

6. Système d'échange de messages codés entre stations selon la revendication 2, caractérisé par le fait que l'état du module de liaison est transmis dans la voie temporelle impaire du créneau de temps attribué au module de liaison.

7. Système d'échange de messages codés entre stations selon la revendication 1, caractérisé par le fait qu'un élément binaire d'exclusivité est émis dans la voie temporelle impaire du créneau de temps attribué au module de liaison lorsque la station désire s'assurer l'exclusivité d'une tâche.

8. Système d'échange de messages codés entre stations selon la revendication 1, caractérisé par le fait que le bus de signalisation et le bus d'informations sont doublés, que l'émission d'un message de signalisation a lieu sur les deux bus de signalisation, que la réception d'un message de signalisation a lieu sur un bus de signalisation, que l'émission d'un message d'information a lieu sur les deux bus d'informations, que la réception d'un message d'informations a lieu sur un bus d'information, et que la commutation en réception d'un bus sur un autre est commandé par la station qui reçoit un message ayant une faute d'imparité.

## Claims

1. A system for exchanging encoded messages between stations which are interconnected by a signal bus (LMS) and an information bus (LMI), each station being connected to a general time base and including a connection module (2) connected to the information bus and to the signal bus, theses buses being serial multiplex links synchroneous with the time base, a time interval in a signalling frame being allocated to each station the connection module of which comprises means for calling another station in the allocated time interval by the emission of the number of the called station, characterized in that the multiplex links are serial multiplex links, that in the signalling frame each time interval is composed of two time channels, an even-numbered and the next following odd-numbered channel, and that each connection module comprises :
— means (5, 25, 26) for receiving a response from the called station during its time interval, and means (27, 28) for authorizing the sending of an information message,
— means (38, 39) for sending a response upon receipt of its call number sent from the calling station in the time interval of said calling station
— means (55) for storing an information message and means (4) for sending said message in an information bus frame,
— means (3) for receiving an information message and means (51) for storing the message,
— means (61) for computing the odd parity of the sent message and means (62, 4) for sending an odd parity bit at the end of the message and
— means (68) for computing the parity of the received information message constituted by the original information message plus the odd parity bit, and means (72, 4) for sending an acknowledgement signal or a signal « parity error » according to the result of computation in the information frame following the message.

2. A system for exchanging encoded messages between stations according to claim 1, characterized in that the connection module first comprises
— means (13) for sending its status in its time interval and
— means for receiving (30) and storing (32) the status of each other station.

3. A system for exchanging encoded messages between stations according to claim 1, characterized in that the numbers of the time channels in a time interval in the signal frame are higher for lower station priorities, and the connection module further comprises means (22, 23) for receiving a response from a higher priority called station in the time interval of that station, and for disabling transmission of an information message.

4. A system for exchanging encoded messages between stations according to claim 1, characterized in that the number of a called station is transmitted in the even-numbered time channel of the time interval which is allocated to the connection module.

5. A system for exchanging encoded messages between stations according to claim 1, characterized in that a bit which indicates the kind of message is sent out in the even-numbered time channel of the time interval which is allocated to the connection module.

6. A system for exchanging encoded messages between stations according to claim 2, characterized in that the state of the connection module is transmitted in the odd-numbered time channel of the time interval which is allocated to the connection module.

7. A system for exchanging encoded messages between stations according to claim 1, characterized in that an exclusivity bit is sent out in the odd-numbered time channel of the time interval which is allocated to the connection module whenever the station desires to be sure of exclusivity of a task.

8. A system for exchanging encoded messages between stations according to claim 1, characterized in that the signal bus and the information bus are duplicated, the emission of a signalling message taking place on both signal buses whereas the reception of a signalling message takes place on one signal bus, the emission of an information message taking place on both information buses whereas the reception of

**0 018 617**

an information message takes place on one information bus, and that the switch-over from one bus to the other during reception is controlled by the station which receives a message having a parity error.

## Ansprüche

1. System zum Austauschen kodierter Nachrichten zwischen über eine Signalisationsschiene (LMS) und eine Informationsschiene (LMI) miteinander verbundenen Stationen, wobei jede Station mit einem allgemeinen Taktgeber verbunden ist und einen Verbindungsmodul (2) aufweist, der mit den beiden Schienen verbunden ist, und wobei die Schienen als Multiplexe ausgebildet sind, die zum Taktgeber synchron gesteuert werden, derart, daß ein Zeitabschnitt in einem Signalisationrahmen jeder Station zugeteilt ist, für die der Verbindungsmodul Mittel besitzt, um in dem ihr zugeteilten Zeitabschnitt eine andere Station durch Aussendung der Nummer der gerufenen Station zu rufen, dadurch gekennzeichnet, daß die Multiplexe Serienmultiplexe sind, daß im Signalisationsrahmen jeder Zeitabschnitt aus zwei Zeitkanälen besteht, einem geradzahligen und dem darauffolgenden ungeradzahligen Kanal, und daß jeder Verbindungsmodul enthält :
   — Mittel (5, 25, 26) zum Empfang einer von der gerufenen Station ausgesandten Antwort in dem zugeteilten Zeitabschnitt und Mittel (27, 28), um die Aussendung einer Informationsnachricht zu autorisieren,
   — Mittel (38, 39), um in dem der rufenden Station zugeteilten Zeitabschnitt eine Antwort nach dem Empfang der von der rufenden Station ausgesandten Rufnummer auszusenden,
   — Mittel (55) zur Speicherung einer Informationsnachricht und Mittel (4), um diese Nachricht in einem Rahmen der Informationsschiene auszusenden,
   — Mittel (3) zum Empfang einer Informationsnachricht und Mittel (51) zur Speicherung dieser Nachricht,
   — Mittel (61) zur Berechnung des Paritätsbits der ausgesandten Nachricht und Mittel (62,4) zur Aussendung eines Paritätsbits im Anschluß an die Nachricht, und
   — Mittel (68) zur Berechnung des Paritätsbits der empfangenen Informationsnachricht, die aus der Gesamtheit von Informationsnachricht plus Paritätsbit besteht, und Mittel (72,4) zur Aussendung eines Empfangsbestätigungssignals oder eines Signals betreffend einen Paritätsfehler, je nach dem Rechenergebnis, wobei die Aussendung im Informationsrahmen im Anschluß an die Nachricht erfolgt.

2. System zum Austausch kodierter Nachrichten zwischen Stationen nach Anspruch 1, dadurch gekennzeichnet, daß der Verbindungsmodul außerdem
   — Mittel (13) zum Aussenden seines Zustands in dem ihm zugeteilten Zeitabschnitt und
   — Mittel zum Empfang (30) und zur Speicherung (32) des Zustands jeder der anderen Stationen enthält.

3. System zum Austausch von kodierten Nachrichten zwischen Stationen nach Anspruch 1, dadurch gekennzeichnet, daß im Signalisationsrahmen die Nummern der Zeitkanäle eines Zeitabschnitts umso höher sind, als die Priorität einer Station geringerwertig ist, und daß der Verbindungsmodul außerdem Mittel (22, 23) aufweist, um in dem einer prioritätshöheren Station zugeteilten Zeitabschnitt eine von einer Station, die von einer prioritätshöheren Station gerufen wird, ausgesandte Antwort zu empfangen und die Aussendung einer Informationsnachricht zu blockieren.

4. System zum Austausch von kodierten Nachrichten zwischen Stationen nach Anspruch 1, dadurch gekennzeichnet, daß die Nummer einer gerufenen Station in dem geradzahligen Zeitkanal des dem Verbindungsmodul zugeteilten Zeitabschnitts übertragen wird.

5. System zum Austausch kodierter Nachrichten zwischen Stationen nach Anspruch 1, dadurch gekennzeichnet, daß ein Binärelement, das die Art der Nachricht angibt, im geradzahligen Zeitkanal des dem Verbindungsmodul zugeteilten Zeitabschnitts ausgesandt wird.

6. System zum Austausch kodierter Nachrichten zwischen Stationen nach Anspruch 2, dadurch gekennzeichnet, daß der Zustand des Verbindungsmoduls im ungeradzahligen Zeitkanal des dem Verbindungsmodul zugeteilten Zeitabschnitts übertragen wird.

7. System zum Austausch kodierter Nachrichten zwischen Stationen nach Anspruch 1, dadurch gekennzeichnet, daß ein Exklusivitäts-Binärelement im ungeradzahligen Zeitkanal des dem Verbindungsmodul zugeteilten Zeitabschnitts ausgesandt wird, wenn die Station sich die Exklusivität einer Aufgabe sichern will.

8. System zum Austausch von kodierten Nachrichten zwischen Stationen nach Anspruch 1, dadurch gekennzeichnet, daß die Signalisationsschiene und die Informationsschiene doppelt vorgesehen sind, daß die Aussendung einer Signalisationsnachricht auf beiden Signalisationsschienen erfolgt, daß der Empfang einer Signalisationsnachricht auf einer Signalisationsschiene erfolgt, daß die Aussendung einer Informationsnachricht auf beiden Informationsschienen erfolgt, daß der Empfang einer Informationsnachricht auf einer Informationsschiene erfolgt, und daß die Umschaltung von einer Schiene auf die andere beim Empfang von der Station gesteuert wird, die eine mit Paritätsfehler versehene Nachricht empfängt.

0 018 617

# FIG. 1

# FIG. 2

0 018 617

# FIG.3

FIG. 4